# EUROPEAN PATENT APPLICATION

(11) **EP 1 608 098 A1**
(43) Date of publication of application: **21.12.2005**
(21) Application number: 05253432.8
(22) Date of filing: 03.06.2005
(51) Int. Cl.: H04J 14/02

(54) **Optical add/drop multiplexer having an alternated channel configuration**

(30) Priority: 16.06.2004 US 869431
(71) Applicant: LUCENT TECHNOLOGIES INC., Murray Hill, New Jersey 07974-0636 (US)
(72) Inventor: Fishman, Daniel A., Lakewood, New Jersey 08701 (US); Xiang, Liu, Marlboro, New Jersey 07746 (US); Silverio, Vincent, John, Middletown, New Jersey 07748 (US); Thompson, William A., Red Bank, New Jersey 07701 (US); Ying, Jinpin, East Brunswick, New Jersey 08816 (US)
(74) Representative: Sarup, David Alexander

(57) **Abstract**

An optical add/drop multiplexer (OADM) adapted to route optical signals having at least two different bit rates. The OADM has at least two sets of DWDM channels with channels in a first set having a first bandwidth value, e.g., suitable for the transmission of signals having a bit rate of 10 Gb/s, and channels in a second set having a second bandwidth value, e.g., suitable for the transmission of signals having a bit rate of 40 Gb/s. In one embodiment, the frequencies of the channels from the first set are interleaved with the frequencies of the channels from the second set, and the OADM has first and second optical branches adapted to process optical signals corresponding to the first and second sets, respectively. Initially, the OADM may be configured to process 10-Gb/s signals using the first optical branch only while leaving the second optical branch unutilized. During an upgrade, which adds a 40-Gb/s service to the system, the OADM may be configured to process 40-Gb/s signals using the second optical branch. Advantageously, the upgrade can be performed without or with minimum interruptions to the 10-Gb/s service already in place.

## Description

### BACKGROUND OF THE INVENTION

### Field of the Invention

The present invention relates to optical communication equipment and, more specifically, to optical add/drop multiplexers.

### Description of the Related Art

Modem optical communication systems, e.g., long-haul and metro networks, employ dense wavelength division multiplexed (DWDM) channels adapted to carry optical signals having a bit rate of 10 Gb/s. It is envisioned that future optical communication systems will employ DWDM channels adapted to carry signals having a bit rate of 40 Gb/s. 40-Gb/s optical signals, based on conventional and/or advanced modulation formats, are likely to be used together with 10-Gb/s optical signals and/or gradually displace the latter. It is therefore desirable to have a communication platform that supports both 10- and 40-Gb/s optical signals and enables reconfiguration of the optical communication system, e.g., when a 40-Gb/s upgrade becomes available, without or with minimum interruptions to the 10-Gb/s service already in place.

### SUMMARY OF THE INVENTION

Problems in the prior art are addressed, in accordance with the principles of the present invention, by an optical add/drop multiplexer (OADM) adapted to route optical signals having at least two different bit rates. The OADM has at least two sets of DWDM channels with channels in a first set having a first bandwidth value, e.g., suitable for the transmission of signals having a bit rate of 10 Gb/s, and channels in a second set having a second bandwidth value, e.g., suitable for the transmission of signals having a bit rate of 40 Gb/s and employing conventional and/or advanced modulation formats. In one embodiment, the frequencies of the channels from the first set are interleaved with the frequencies of the channels from the second set, and the OADM has first and second optical branches adapted to process optical signals corresponding to the first and second sets, respectively. Initially, the OADM may be configured to process 10-Gb/s signals using the first optical branch only while leaving the second optical branch unutilized. During an upgrade, which adds a 40-Gb/s service to the system, the OADM may be configured to process 40-Gb/s signals using the second optical branch. Advantageously, the upgrade can be performed without or with minimum interruptions to the 10-Gb/s service already in place. The second optical branch, if so desired, may also be used to transmit 10-Gb/s signals with a smaller filtering penalty than that in the first optical branch, but at the expense of having a reduced overall system capacity.

According to one embodiment, the present invention is an optical apparatus, comprising a plurality of ports, which apparatus is adapted to route optical signals between different ports based on wavelength, wherein: the optical signals correspond to two or more sets of channels, each set having one or more channels with a corresponding bandwidth value; and at least two different sets of channels have different bandwidth values.

According to another embodiment, the present invention is a method of transmitting optical signals, comprising: de-multiplexing optical signals applied to a main input port of an optical add/drop multiplexer (OADM) for selective distribution between a main output port and a drop port of the OADM; and multiplexing optical signals applied to an add port of the OADM with the optical signals distributed from the main input port to the main output port, wherein: the optical signals correspond to two or more sets of channels, each set having one or more channels with a corresponding bandwidth value; and at least two different sets of channels have different bandwidth values.

According to yet another embodiment, the present invention is an apparatus, comprising: means for de-multiplexing optical signals applied to a main input port of an optical add/drop multiplexer (OADM) for selective distribution between a main output port and a drop port of the OADM; and means for multiplexing optical signals applied to an add port of the OADM with the optical signals distributed from the main input port to the main output port, wherein: the optical signals correspond to two or more sets of channels, each set having one or more channels with a corresponding bandwidth value; and at least two different sets of channels have different bandwidth values.

According to yet another embodiment, the present invention is a communication network, comprising a plurality of nodes adapted to exchange communication signals, wherein at least one node includes an optical apparatus having a plurality of ports, which apparatus is adapted to route optical signals between different ports based on wavelength, wherein: the optical signals correspond to two or more sets of channels, each set having one or more channels with a corresponding bandwidth value; and at least two different sets of channels have different bandwidth values.

### BRIEF DESCRIPTION OF THE DRAWINGS

Fig. 1 shows a block diagram of an optical communication system, in which the present invention can be practiced;
Fig. 2 shows an optical add/drop multiplexer (OADM) that can be used in a node of the communication system shown in Fig. 1;
Fig. 3 shows a block diagram of an OADM that can be used to implement the OADM shown in Fig. 2;
Fig. 4 shows a block diagram of a wavelength blocker that can be used in the OADM of Fig. 3;
Fig. 5 shows a block diagram of another OADM that can be used to implement the OADM shown in Fig. 2;
Figs. 6A-B graphically show two representative DWDM channel configurations that can be used in certain embodiments of the OADMs shown in Figs. 2, 3, and 5;
Fig. 7 graphically shows a DWDM channel configuration that can be used in the OADMs of Figs. 2, 3, and 5;
Fig. 8 graphically illustrates properties of an interleaver that can be used in the OADMs of Figs. 3 and 5;
Figs. 9A-B show block diagrams of a DMUX and a MUX, respectively, which can be used in the OADMs of Figs. 3 and 5;
Figs. 10A-B graphically illustrate channel-population schemes for the DWDM channel configuration of Fig. 7;
Fig. 11A graphically shows a DWDM channel configuration that can be used in the OADMs of Figs. 2, 3, and 5;
Fig. 11B illustrates properties of another DMUX and another MUX that can be used in the OADM of Figs. 3 and 5;
Fig. 12 shows a block diagram of a DMUX that can be used to implement the DMUX illustrated in Fig. 11B;
Fig. 13 shows a block diagram of a MUX that can be used to implement the MUX illustrated in Fig. 11B; and
Figs. 14A-B graphically illustrate channel-population schemes for the DWDM channel configuration of Fig. 11A.

### DETAILED DESCRIPTION

Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments mutually exclusive of other embodiments.

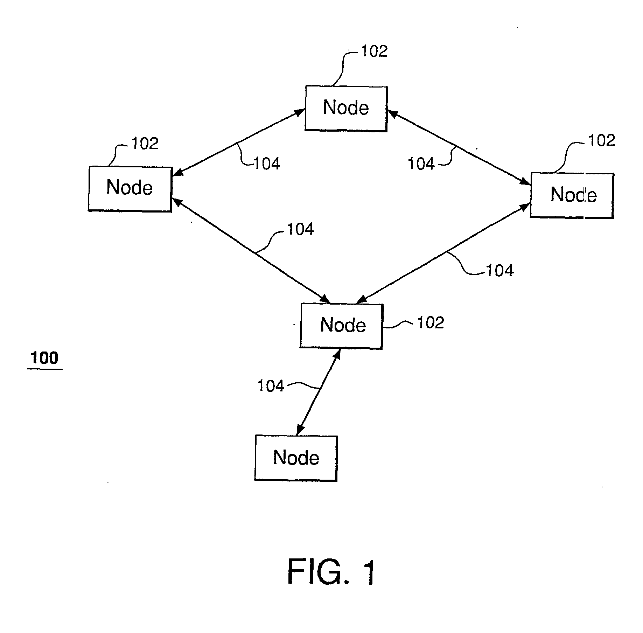

Fig. 1 shows a block diagram of an optical communication system **100**, in which the present invention can be practiced. System 100 has a network of nodes **102** coupled by bi-directional links **104**, where each of the nodes is adapted to process optical signals carried via the links. Signal processing at each node **102** includes, but is not limited to, routing optical signals between adjacent nodes, extracting (i.e., dropping) from the network traffic optical signals designated for local receivers, and inserting (i.e., adding) into the network traffic optical signals generated by local transmitters. Each link **104** may include one or more optical fibers, optical amplifiers (not shown), signal regenerators (not shown), and other customary components.

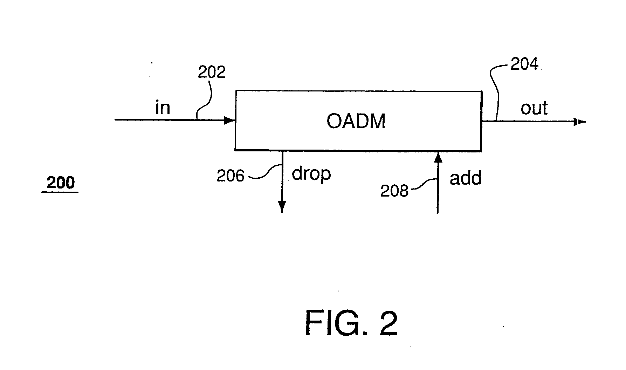

Fig. 2 shows an optical add/drop multiplexer (OADM) **200** that can be used in any node **102** of system **100.** OADM **200** has at least four ports including a main input port **202,** a main output port **204**, a drop port **206**, and an add port **208**. DWDM signals applied to main input port **202** are directed to either drop port **206,** e.g., for distribution to local receivers, or main output port **204,** e.g., for further transmission over the network of system **100.** The dropped signals are typically blocked from reaching main output port **204.** Some or all of the previously unused DWDM channels and/or DWDM channels corresponding to the dropped signals may then be used to transmit optical signals applied to add port **208,** e.g., from local transmitters. These optical signals are multiplexed with the optical signals received at main input port **202** that are not dropped at drop port **206,** and the multiplexed signal is output at main output port **204.**

### OADM Architecture

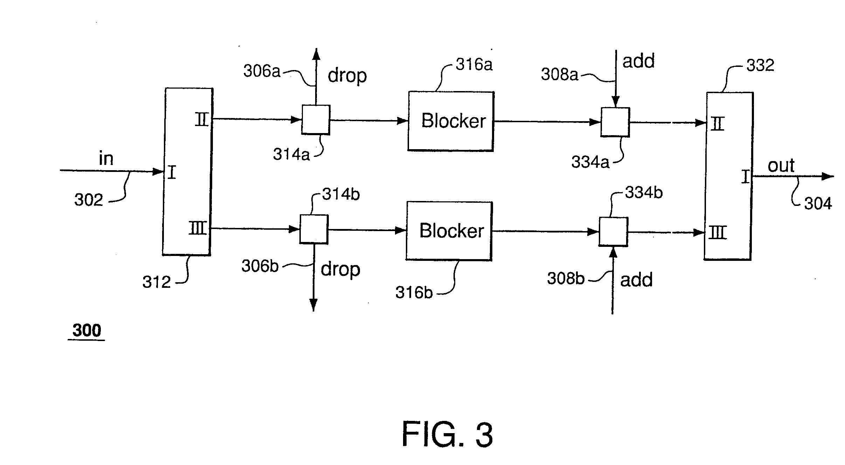

Fig. 3 shows a block diagram of an OADM **300** that can be used to implement OADM **200** according to one embodiment of the invention. OADM **300** is a six-port device having a main input port **302**, a main output port **304**, two drop ports **306a-b**, and two add ports **308a-b**. OADM **300** operates by directing DWDM signals applied to main input port **302** to either drop ports **306a-b**, e.g., for distribution to local receivers, or main output port **304**, e.g., for further transmission over the network. The signals dropped at drop ports **306a-b** are blocked from reaching main output port **304**. Some or all of the previously unused DWDM channels and/or DWDM channels corresponding to the dropped signals may then be used to transmit optical signals applied to add ports **308a-b,** e.g., from local transmitters. These optical signals are multiplexed with the optical signals received at main input port **302** that are not dropped at drop ports **306a-b**, and the multiplexed signal is output at main output port **304.** This functionality is realized in OADM **300** using a de-multiplexer (DMUX) **312,** a multiplexer (MUX) **332,** two wavelength blockers **316a-b,** two splitters **314a-b,** and two combiners **334a-b,** each of which is described in more detail below.

DMUX **312** is a three-port device having an input port labeled I, which is coupled to main input port **302,** and two output ports labeled II and III. DMUX **312** is adapted to direct the optical signals applied to port I to one of its two output ports based on wavelength or DWDM channel number. More specifically, in one embodiment, DMUX **312** directs optical signals corresponding to a first group of DWDM channels to output port II, while directing optical signals corresponding to a second group of DWDM channels to output port III. MUX **332** is a three-port device having two input ports labeled II and III and an output port labeled I, which output port is coupled to main output port **304.** MUX **332** is adapted to essentially perform a reverse function of that performed by DMUX **312.** More specifically, MUX **332** multiplexes the optical signals applied to its input ports and directs the multiplexed signal to the output port.

In one embodiment, each of DMUX **312** and MUX **332** is implemented using a substantially identical bi-directional optical element. More specifically, this optical element is designed to route (i) optical signals corresponding to the first group of DWDM channels between ports I and II and (ii) optical signals corresponding to the second group of DWDM channels between ports I and III. For example, when the optical element is configured as DMUX **312**, an input signal is applied to port I, and two corresponding output signals emerge at ports II and III. Alternatively, when the optical element is configured as MUX **332**, two input signals are applied to ports II and III, and a corresponding output signal emerges at port I.

Each of wavelength blockers **316a-b** is a configurable device, which transmits optical signals intended for main output port **304** and blocks optical signals intended for the corresponding drop port **306**. As such, wavelength blockers **316a-b** are adapted to handle optical signals corresponding to the first and second groups of DWDM channels, respectively. Based on appropriate control signals (not shown), each of wavelength blockers **316a-b** can at different times block/transmit different sub-groups belonging to the corresponding group of DWDM channels.

Each of splitters **314a-b** is a passive three-port device adapted to split the signal received from DMUX **312** between the corresponding drop port **306** and wavelength blocker **316.** Similarly, each of combiners **334a-b** is a passive three-port device adapted to combine the signals received from the corresponding add port **308** and wavelength blocker **316** and direct the combined signal to MUX **332.** In one embodiment, each of splitters **314a-b** and combiners **334a-b** is implemented using a substantially identical bi-directional optical element that, depending on the light-propagation direction, can operate as either a power splitter or power combiner.

Using the above-described components, OADM **300** can route an optical signal applied to main input port **302,** for example, as follows. Suppose that this optical signal corresponds to the first group of DWDM channels. Then, DMUX **312** directs the signal to its output port II. Power splitter **314a** then produces two signal copies and directs the first copy to drop port **306a** and the second copy to wavelength blocker **316a**. If the optical signal is intended to be dropped at drop port **306a**, then wavelength blocker **316a** is configured to block the second signal copy from propagating beyond the wavelength blocker. At the same time, a local receiver (not shown) coupled to drop port **306a** receives the first signal copy, thereby accomplishing a drop function. Since the corresponding DWDM channel becomes vacant beyond wavelength blocker **316a**, a local transmitter (not shown) can now apply a different optical signal corresponding to the same DWDM channel to add port **308a** without causing signal interference. Power combiner **334a** then combines that signal with the signals transmitted by wavelength blocker **316a** and directs the combined signal to input port II of MUX **332,** which routes it to main output port **304,** thereby accomplishing an add function.

Alternatively, if the optical signal applied to main input port **302** is intended to be transmitted from main input port **302** to main output port **304,** then wavelength blocker **316a** is configured to pass the second signal copy produced by power splitter **314a.** At the same time, a local receiver coupled to drop port **306a** is configured to ignore the first signal copy. Since, in this situation, the corresponding DWDM channel is not vacant beyond wavelength blocker **316a,** a local transmitter does not apply a different optical signal corresponding to the same DWDM channel to add port **308a** to avoid signal interference.

One skilled in the art will understand that an optical signal corresponding to the second group of DWDM channels is processed in OADM **300** in a similar fashion, but using a different OADM branch, i.e., that including output port III of DMUX **312,** the corresponding power splitter **314b**, drop port **306b**, wavelength blocker **316b**, the corresponding power combiner **334b**, add port **308b,** and input port III of MUX **332.**

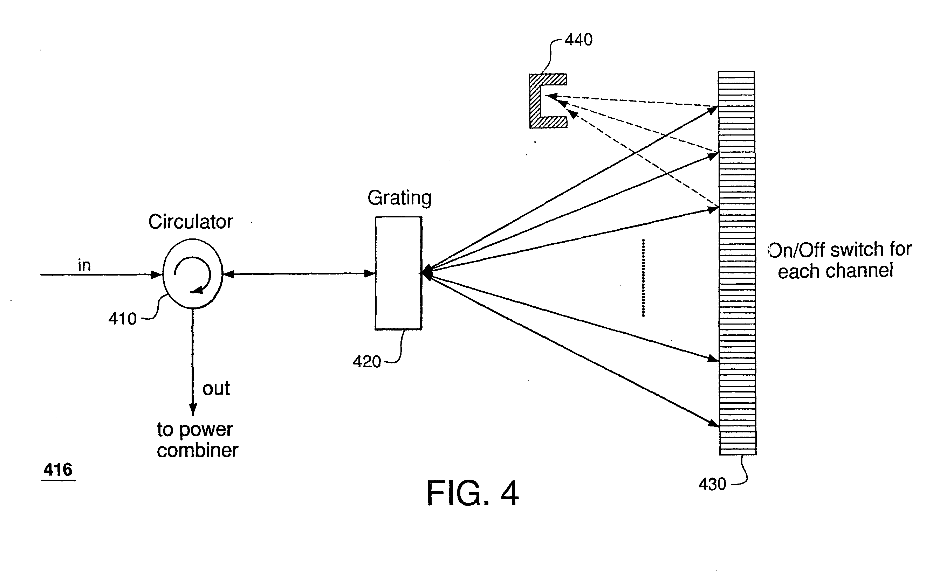

Fig. 4 shows a block diagram of a wavelength blocker **416** that can be used as either wavelength blocker **316** of Fig. 3 according to one embodiment of the invention. Wavelength blocker **416** has a circulator **410**, which directs a DWDM signal applied to the wavelength blocker, e.g., by power splitter 314 (Fig. 3), to a grating **420**. Grating **420** then disperses the signal in wavelength and directs it to an on/off switch **430**. In Fig. 4, the plurality of arrows between grating **420** and switch **430** represents light corresponding to different DWDM channels. Switch **430** has an array of rotatable MEMS mirrors, one mirror per DWDM channel. When an optical signal corresponding to a particular DWDM channel needs to pass through wavelength blocker **416,** the corresponding mirror in switch **430** is rotated to reflect the signal back to grating **420**, where it is recombined with other reflected signals and directed back to circulator **410,** which outputs it from the wavelength blocker, e.g., toward power combiner **334** (Fig. 3). Alternatively, when an optical signal corresponding to a particular DWDM channel needs to be blocked in wavelength blocker **416**, the corresponding mirror in switch **430** is rotated to reflect the signal toward a signal dump **440** as shown by the dashed lines in Fig. 4, where the signal is absorbed.

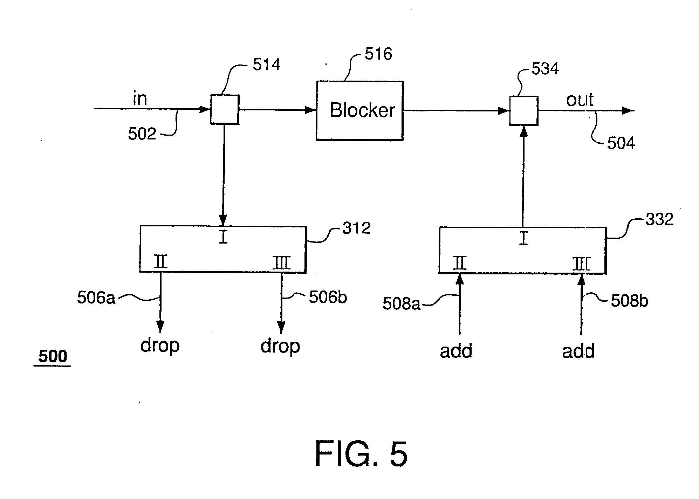

Fig. 5 shows a block diagram of an OADM **500** that can be used to implement OADM **200** (Fig. 2) according to another embodiment of the invention. Similar to OADM **300** (Fig. 3), OADM **500** has a main input port **502**, a main output port **504**, two drop ports **506a-b**, and two add ports **508a-b**. OADM **500** operates similar to OADM **300** (Fig. 3) by directing optical signals applied to main input port **502** to either drop ports **506a-b** or main output port **504.** Some or all of the DWDM channels corresponding to the dropped signals and/or any unoccupied channels may be reused to transmit optical signals applied to add ports **508a-b**, which are multiplexed with the optical signals received at main input port **502** that are not dropped at drop ports **506a-b**. The multiplexed signal is then output at main output port **504.**

Similar to OADM **300,** OADM **500** has a DMLTX **312** and a MUX **332.** OADM **500** also employs a power splitter **514** and a power combiner **534** that are similar to power splitter **314** and a power combiner **334**, respectively, of OADM **300.** However, a wavelength blocker **516** employed in OADM **500** is somewhat different from either one of wavelength blockers **316a-b** of OADM **300**. More specifically, each of wavelength blockers **316a-b** is adapted to process optical signals corresponding to only one group of DWDM channels. For example, wavelength blockers **316a** and **316b** process optical signals corresponding to the first and second groups of DWDM channels, respectively. In contrast, wavelength blocker **516** is adapted to process optical signals corresponding to both groups of DWDM channels.

OADM **500** can route an optical signal applied to main input port **502,** for example, as follows. Power splitter **514** produces two signal copies and directs the first copy to DMUX **312** and the second copy to wavelength blocker **516.** If the optical signal is intended to be dropped at one of drop ports **506a-b,** then wavelength blocker **516** is configured to block the second signal copy from propagating beyond the wavelength blocker. At the same time, DMUX **312** directs the first signal copy to the corresponding one of drop ports **506a-b** depending on whether the optical signal is in the first or second group of channels, and a local receiver (not shown) coupled to that drop port receives that signal copy, thereby accomplishing a drop function. Since the corresponding DWDM channel becomes vacant beyond wavelength blocker **516**, a local transmitter (not shown) can now apply a different optical signal corresponding to the same DWDM channel to the appropriate one of add ports **508a-b** without causing signal interference. MUX **332** then directs that signal to power combiner **534**, where the signals output by the MUX and the signals transmitted by wavelength blocker **516** are combined and directed to main output port **504**, thereby accomplishing an add function.

Alternatively, if the optical signal applied to main input port **502** is intended to be transmitted to main output port **504**, then wavelength blocker **516** is configured to pass the second signal copy produced by power splitter **514.** At the same time, the local receiver coupled to the corresponding one of drop ports **506a-b** is configured to ignore the first signal copy. Since, in this situation, the corresponding DWDM channel is not vacant beyond wavelength blocker **516**, a local transmitter does not apply a different optical signal corresponding to the same DWDM channel to the corresponding one of add ports **508a-b** to avoid signal interference at power combiner **534**.

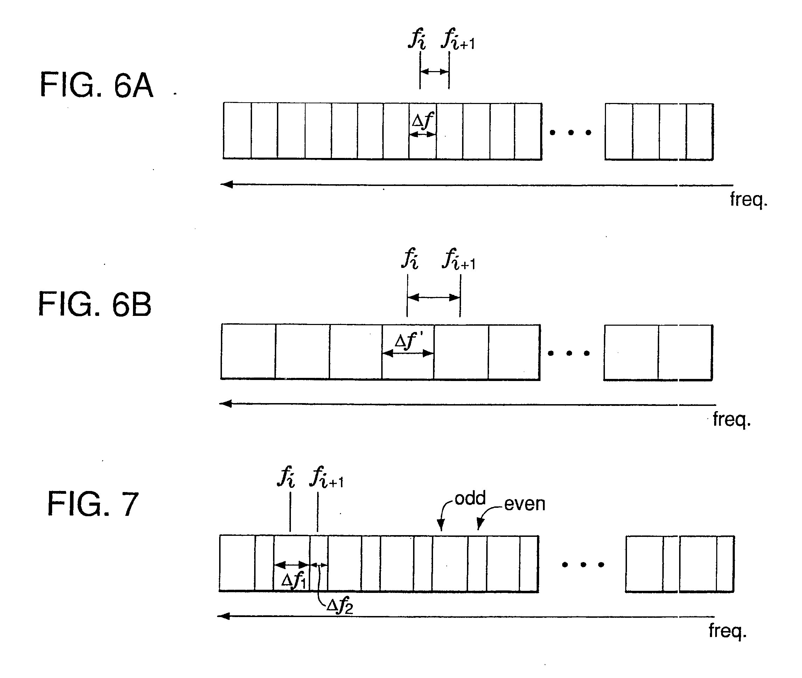

Figs. 6A-B graphically show two representative DWDM channel configurations that can be used in certain embodiments of OADMs **200, 300,** and **500.** More specifically, in Figs. **6A-B,** each DWDM channel is represented by a box having a base (e.g., center) frequency *f*_{*i*} and a width *Δf* (Fig. 6A) or Δ*f'* (Fig. 6B) corresponding to the bandwidth allocated to that channel, where i is the DWDM channel number. Each of the configurations shown in Figs. 6A-B utilizes an ITU (International Telecommunication Union) frequency grid, which provides that the base frequencies of two adjacent DWDM channels be separated by a frequency interval of *mx*50 GHz, where *m* is a positive integer. In Fig. 6A, *m* = 1, which results in |*f*_{*i*} - *f*_{*i*+1}| = 50 GHz. Similarly, in Fig. 6B, *m* = 2, which results in |*f*_{*i*} *- f*_{*i*+1}| = 100 GHz.

As seen in Fig. 6, each of the shown channel configurations allocates equal bandwidth to each DWDM channel. As such, the configuration of Fig. 6A allocates to each channel a bandwidth of *Δf* = 50 GHz. Similarly, the configuration of Fig. 6B allocates to each channel a bandwidth of *Δf'* = 100 GHz. A typical prior-art communication system has all DWDM channels with the same uniform bandwidth, e.g., channels with a 50-GHz bandwidth only or, alternatively, channels with a 100-GHz bandwidth only.

Each of the 100-GHz channels of Fig. 6B has a sufficient bandwidth for the transmission of either 10- or 40-Gb/s signals, while each of the 50-GHz channels of Fig. 6A has a sufficient bandwidth for the transmission of 10-Gb/s signals, but not for the transmission of conventional 40-Gb/s signals. More specifically, if used for the transmission of 40-Gb/s signals, the 50-GHz channels of Fig. 6A would, due to their limited bandwidth, cause signal distortions that would render the transmitted signals substantially un-decodable at the receiver. On the other hand, the use of the 100-GHz channels of Fig. 6B for the transmission of 10-Gb/s signals would cause the available spectral resources to be utilized relatively inefficiently.

### Alternated Channel Configuration

Fig. 7 graphically shows a DWDM channel configuration that can be used in OADMs **200, 300,** and **500** according to one embodiment of the invention. Fig. 7 is analogous to Fig. 6 in the graphical depiction of DWDM channels as frequency boxes. Similar to the configuration of Fig. 6A, the configuration of Fig. 7 corresponds to an ITU frequency grid with *m*=1. As such, the spacing between the base frequencies of adjacent DWDM channels is about 50 GHz. However, one difference between the configurations of Figs. 6A and 7 is that the latter allocates unequal bandwidth to different channels. In particular, the configuration of Fig. 7 has two sets of channels, with the channels in one set having a bandwidth of Δ*f*_{*1*} and the channels in the other set having a bandwidth of *Δf*_{*2*}, where Δ*f*₁ + Δ*f*₂ ≈ 100*GHz*. Channels in the two sets are interleaved as shown in Fig. 7 such that each odd channel has a bandwidth of *Δf*_{*1*} and each even channel has a bandwidth of *Δf*_{*2*}. In one embodiment, Δ*f*₁ ≈ 2Δ*f*₂ ≈ 66.7*GHz*. Hereafter, the channel configuration illustrated in Fig. 7 is referred to as an example of an alternated channel configuration.

The alternated channel configuration of Fig. 7 has the same maximum supportable channel density, about 1 channel per 50 GHz, as the configuration of Fig. 6A. However, unlike the latter, the alternated channel configuration is suitable for the transmission of both 10- and 40-Gb/s signals. For example, each of the odd channels of Fig. 7 can be used for the transmission of 40-Gb/s signals, while each of the even channels can be used for the transmission of 10-Gb/s signals. The extra bandwidth allocated to each odd channel compared to that in Fig. 6A is such that the corresponding signal distortions induced due to the bandwidth limitations become acceptable for successfully decoding 40-Gb/s signals at the receiver. Of course, the extra bandwidth is added to odd channels at the expense of even channels. However, the bandwidth reduction in each of the even channels compared to that available in the configuration of Fig. 6A is such that the corresponding signal distortions of 10-Gb/s signals are relatively insignificant and those signals can still be successfully decoded at the receiver. Due to both linear and nonlinear crosstalk concerns (particularly in long-haul transmissions), a populated 40-Gb/s channel may not be adjacent to a populated 10-Gb/s channel in communication systems configured for long-distance transmissions, e.g., greater than about 800 km. While the total number of populated channels may decrease when a 40-Gb/s service is added, the overall system capacity will still increase because the 40-Gb/s channels utilize the available spectral resources with much higher spectral efficiency than that of the 10-Gb/s channels.

In one embodiment, the relative bandwidths of the odd and even channels in the alternated channel configuration are selected such that the penalty on the transmission of 10-Gb/s signals and the improvement in the transmission of 40-Gb/s signals with respect to the configuration of Fig. 6A are balanced to achieve an optimum overall transmission quality. One skilled in the art will appreciate that the alternated channel configuration has certain advantages over the configuration of Fig. 6B because it uses the available spectral resources more efficiently and has a higher spectral density of channels.

OADM **300** (Fig. 3) can be adapted to process optical signals corresponding to the alternated channel configuration of Fig. 7, for example, as follows. The first group of channels, which is routed through the OADM branch coupled between port II of DMLTX **312** and port II of MUX **332**, includes the even channels of Fig. 7. At the same time, the second group of channels, which is routed through the OADM branch coupled between port III of DMUX **312** and port III of MUX **332**, includes the odd channels of Fig. 7.

Similarly, OADM **500** (Fig. 5) can be adapted to process optical signals corresponding to the alternated channel configuration of Fig. 7, for example, as follows. The first group of channels, which is routed between main input port **502**, drop port **506a**, add port **508a**, and main output port **504** includes the even channels of Fig. 7; and the second group of channels, which is routed between main input port **502,** drop port **506b**, add port **508b**, and main output port **504** includes the odd channels of Fig. 7. In addition, wavelength blocker **516** needs to be adapted to handle channels of both bandwidths, as discussed in more detail below.

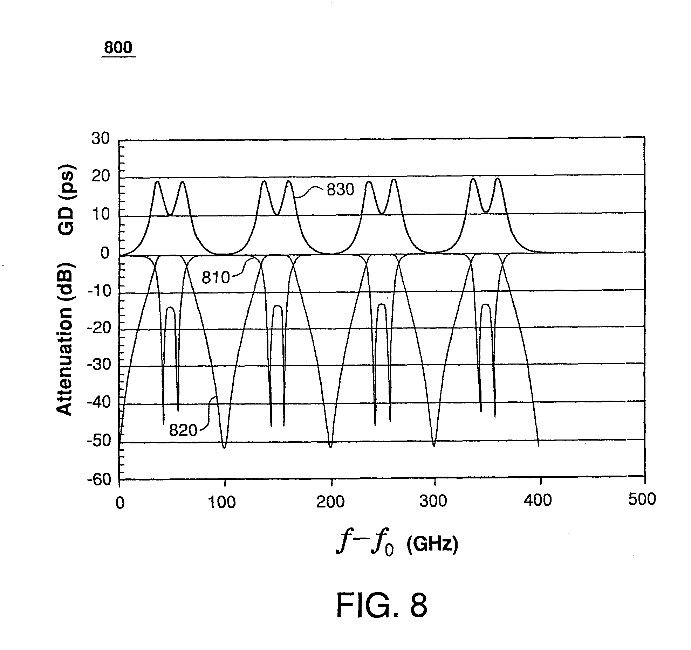

Fig. 8 graphically illustrates properties of a bi-directional optical interleaver **800** that can be used to implement DMUX **312** and/or MUX **332** in each of OADMs **300** and **500** according to one embodiment of the invention. More specifically, the top and bottom panels in Fig. 8 graphically show the group-delay (GD) and attenuation profiles, respectively, of optical interleaver **800.** In one embodiment, curve **810** in Fig. 8 corresponds to light attenuation (i) in DMUX **312** between ports I and III and, also, (ii) in MUX **332** between ports III and I. Similarly, curve **820** in Fig. 8 corresponds to light attenuation (i) in DMUX **312** between ports I and II and, also, (ii) in MUX **332** between ports II and I. As seen in Fig. 8, curve **810** has a plurality of transmission bands each having (i) a base frequency on a 100-GHz grid with grid lines located at 0, 100, 200 GHz, etc. and (ii) a 3-dB bandwidth of about 65 GHz. Transmission ripples located at about 50, 150, 250 GHz, etc. between the transmission bands are primarily due to the interference effects in optical interleaver **800**. These transmission ripples are neither substantially beneficial nor substantially detrimental to the operation of the interleaver in an OADM of the invention. Similarly, curve **820** has a plurality of transmission bands each having (i) a base frequency on a 100-GHz grid with grid lines located at 50, 150, 250 GHz, etc. and (ii) a 3-dB bandwidth of about 35 GHz. In one implementation, optical interleaver **800** is fabricated using the planar waveguide technology, the application of which to the fabrication of optical interleavers, multiplexers, and de-multiplexers is known in the art and described, for example, in U.S. Patent Nos. 6,591,038 and 6,560,380, the teachings of both of which are incorporated herein by reference.

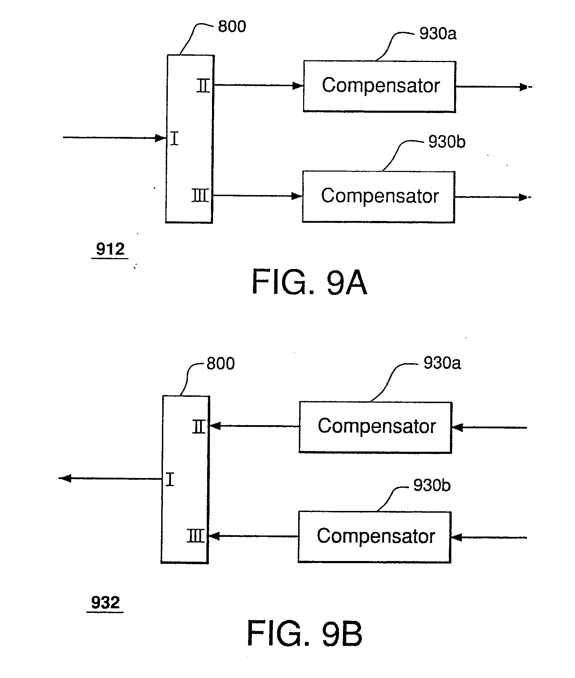

Figs. 9A-B show block diagrams of a DMUX **912** and a MUX **932** that can be used as DMUX **312** and MUX **332,** respectively, according to one embodiment of the invention. Briefly referring to the top panel of Fig. 8, curve **830** indicates that the amplitude of peak-to-peak GD ripples in optical interleaver **800** is on the order of 20 ps, i.e., about 80% of the duration of a 40-Gb/s signaling interval. However, it is often desirable to have that amplitude at or below about 50% of the duration of a signaling interval corresponding to the highest bit rate in the system (in the present case, 40 Gb/s). Each of DMUX **912** and MUX **932** addresses this problem by having a pair of dispersion compensators **930a-b** coupled to interleaver **800** of Fig. 8. Each of dispersion compensators **930a-b** serves to reduce the amplitude of peak-to-peak GD ripples down to a desired level. In DMUX **912,** dispersion compensators **930a-b** are configured to compensate for the group delay already induced in optical interleaver **800,** which is located upstream from the compensators. On the other hand, in MUX **932,** dispersion compensators **930a-b** are configured to pre-compensate for the group delay that will be induced in optical interleaver **800**, which is located downstream from the compensator. In one embodiment, each of dispersion compensators **930a-b** is a compensator disclosed in commonly owned U.S. Patent No. 6,631,246, the teachings of which are incorporated herein by reference.

Briefly referring back to Figs. 3 and 4, wavelength blocker **416** (Fig. 4) can be designed to implement wavelength blocker **316** (Fig. 3) for the alternated channel configuration in a relatively straightforward fashion. Namely, when wavelength blocker **416** implements wavelength blocker **316a**, the array of rotatable MEMS mirrors in switch **430** has gaps between adjacent mirrors, with each gap centered at about the wavelength of the corresponding even channel. Similarly, when wavelength blocker **416** implements wavelength blocker **316b,** the array of rotatable MEMS mirrors in switch **430** has gaps between adjacent mirrors with each gap centered at about the wavelength of the corresponding odd channel.

Now referring back to Figs. 4 and 5, wavelength blocker **416** (Fig. 4) can be designed to implement wavelength blocker **516** (Fig. 5) as follows. The array of rotatable MEMS mirrors in switch **430** has mirrors of two different widths. More specifically, the relative mirror widths in switch **430** correspond to the relative DWDM channel bandwidths. For example, a relatively wide mirror corresponding to an odd DWDM channel is followed by a relatively narrow mirror corresponding to an even DWDM channel, which is followed by a next relatively wide mirror corresponding to an odd DWDM channel, etc.

Communication system **100** (Fig. 1) employing the alternated channel configuration can increase its capacity by, e.g., replacing the transmission of 10-Gb/s signals in some odd bands of Fig. 7 with the transmission of 40-Gb/s signals, while leaving the transmission of 10-Gb/s signals in some even bands of Fig. 7 substantially undisrupted. A corresponding system upgrade includes upgrading only the system components coupled to drop ports **306b** and **506b** and add ports **308b** and **508b** of OADMs **300** and **500,** respectively. At the same time, the system components coupled to drop ports **306a** and **506a** and add ports **308a** and **508a** of OADMs **300** and **500,** respectively, remain substantially unchanged. One skilled in the art will understand that this upgrade achieves a desired purpose of adding a 40-Gb/s service while minimizing disruptions to the 10-Gb/s service already in place. Other beneficial options might be available to the operator of communication system **100** if, at the time of the upgrade, the system did not operate at full capacity. For example, if only odd channels were occupied with the transmission of 10-Gb/s signals while the even channels were vacant, the 10-Gb/s signals can be rolled over into the even channels. Then, the freed odd channels can be populated with new 40-Gb/s services.

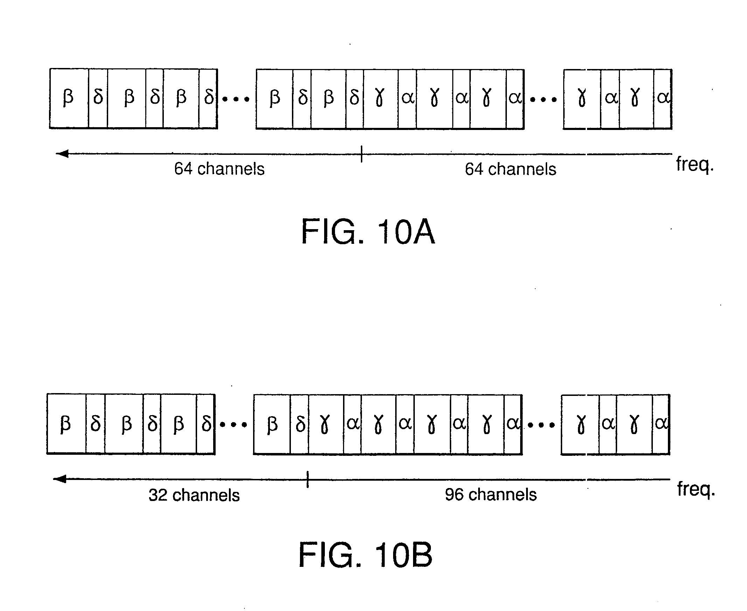

Figs. 10A-B graphically illustrate two possible DWDM channel-population schemes in communication system **100** (Fig. 1), which employs an alternated channel configuration having 64 odd channels and 64 even channels, for the total of 128 channels. Referring to Fig. 10A, in one embodiment, communication system **100** (Fig. 1) employing, in each node **102,** an OADM analogous to OADM **300** (Fig. 3) can increase its capacity by (1) starting with the transmission of 10-Gb/s signals, (2) at some point, adding the transmission of 40-Gb/s signals, and (3) then increasing the number of 10-Gb/s signals. Suppose that, when such system **100** is deployed, it utilizes 32 even DWDM channels in the first 64 channels for the transmission of 10-Gb/s signals while the remaining channels are vacant. In Fig. 10A, these initially utilized (populated) channels are labeled with the letter "α". In this initial configuration, each OADM uses only one branch (e.g., including ports analogous to drop port **306a** and add port **308a)** while the other branch (e.g., including ports analogous to drop port **306b** and add port **308b**) remains substantially unutilized.

In an upgrade, an operator of system **100**, e.g., a telephone company, may increase the system capacity by populating 32 odd DWDM channels in the second 64 channels with the transmission of 40-Gb/s signals. In Fig. 10A, these additionally populated channels are labeled with the letter "β". With the α- and β-channels populated, each OADM uses both of its optical branches.

During a next upgrade, the operator of system **100** may increase the system capacity even further by populating the 32 remaining odd DWDM channels in the first 64 channels with the transmission of 10-Gb/s signals. In Fig. 10A, the channels populated during this upgrade are labeled with the letter "γ". With the γ-channels populated, each OADM reaches a capacity of 64 10-Gb/s channels and 32 40-Gb/s channels, for a total of 96 populated channels.

During yet another upgrade, the operator of system **100** may increase the system capacity still further by populating the remaining unpopulated DWDM channels with the transmission of 10-Gb/s signals. In Fig. 10A, these additionally populated channels are labeled with the letter "δ". It is preferred that these newly added 10-Gb/s signals employ a differential phase-shift keying (DPSK) modulation format to reduce the nonlinear crosstalk between adjacent channels. With the δ-channels populated, each OADM reaches a capacity of 96 10-Gb/s channels and 32 40-Gb/s channels, for a total of 128 populated channels (with 50-GHz channel spacing). Alternatively, the δ-channels can be populated with 40-Gb/s signals when bandwidth-efficient modulation formats, such as optical duobinary or differential-quadrature phase-shift keying (DQPSK) are used. Further, it should be understood that other bandwidth-efficient signals (e.g., 80-Gb/s DQPSK signals) can also be used to populate various channels of Fig. 10A.

An upgrade scheme similar to that just described in the context of Fig. 10A is shown in Fig. 10B. Accordingly, the α-, β-, γ-, and δ-channels shown in Fig. 10B correspond to the upgrade stages analogous to those which populated the similarly labeled channels in Fig. 10A. However, an important difference between the schemes of Figs. 10A and 10B is in the distribution of channels with different data rates (and modulation formats), the number of populated channels of each type after each upgrade and, therefore, in the realized system capacity. This difference can readily be discerned in the table, which follows.

**Table 1:**

| **Number of Populated Channels in the Course of System Upgrades** | | | | | | |
|---|---|---|---|---|---|---|
| ***Upgrade Stage*** | ***Fig. 10A*** | | | ***Fig. 10B*** | | |
| | ***Even*** | ***Odd*** | ***Total*** | ***Even*** | ***Odd*** | ***Total*** |
| α | 32 | - | 32 | 48 | - | 48 |
| α+β | 32 | 32 | 64 | 48 | 16 | 64 |
| α+β+γ | 32 | 64 | 96 | 48 | 64 | 112 |
| α+β+γ+δ | 64 | 64 | 128 | 64 | 64 | 128 |

One skilled in the art will appreciate that, by appropriately selecting the initial number of α- and β-channels, the operator of system **100** can step through different desired values of the system capacity in the course of upgrades.

### Banded Channel Configuration

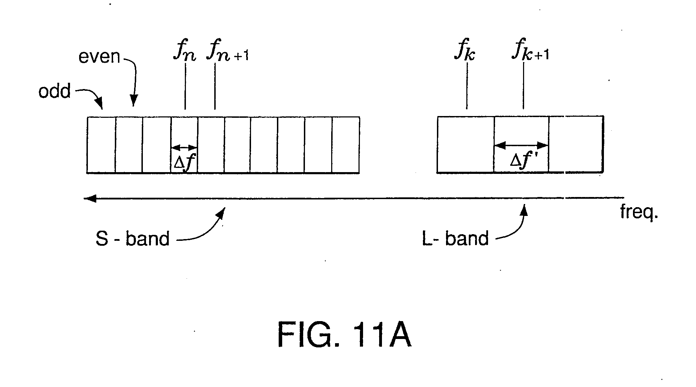

Fig. 11A graphically shows a DWDM channel configuration that can be in OADMs **200, 300,** and **500** according to one embodiment of the invention. Fig. 11A is analogous to Figs. 6 and 7 in the graphical depiction of DWDM channels. Similar to the alternated channel configuration of Fig. 7, the configuration of Fig. 11 A has two sets of channels, wherein the channels in one set have a bandwidth of *Δf* and the channels in the other set have a bandwidth of Δ*f'* different from Δ*f*. However, channels in the two sets are not interleaved as in Fig. 7, but instead, are bundled into two separate spectral bands labeled as "S-band" and "L-band", respectively. The S-band corresponds to *m*=1, which results in |*f*_{*n*} - *f*_{*n*+1}| ≈ 50 GHz, where n is a DWDM channel number in the S-band, and has channels with a bandwidth of *Δf ≈* 50 GHz. The L-band corresponds to *m*=2, which results in |*f*_{*k*} - *f*_{*k*+1}| ≈ 100 GHz, where *k* is a DWDM channel number in the L-band, and has channels with a bandwidth of Δ*f'*≈ 100 GHz. As such, the configuration of Fig. 11A has non-uniform spectral density of channels across its full spectral range, i.e., 1 channel per about 50 GHz in the S-band and 1 channel per about 100 GHz in the L-band. In one embodiment, the S- and L-bands correspond to different amplification bands of an erbium-doped fiber amplifier (EDFA). Hereafter, the channel configuration illustrated in Fig. 11 A is referred to as an example of a banded channel configuration. Note that a guard spectral band may need to be present between the S-band and L-band to avoid band-edge distortions.

Similar to the alternated channel configuration of Fig. 7, the banded channel configuration of Fig. 11A is suitable for the transmission of both 10- and 40-Gb/s signals. For example, each of the channels in the L-band can be used for the transmission 40-Gb/s signals, while each of the channels in the S-band can be used for the transmission 10-Gb/s signals. While having a slightly lower total achievable capacity than the alternated channel configuration, the banded channel configuration enables a simultaneous existence in the system of 10-Gb/s and 40-Gb/s channels with good individual performances. In addition, the bandwidth allocations for the 10-Gb/s and 40-Gb/s channels can be flexible or adjustable, as shown in more detail below.

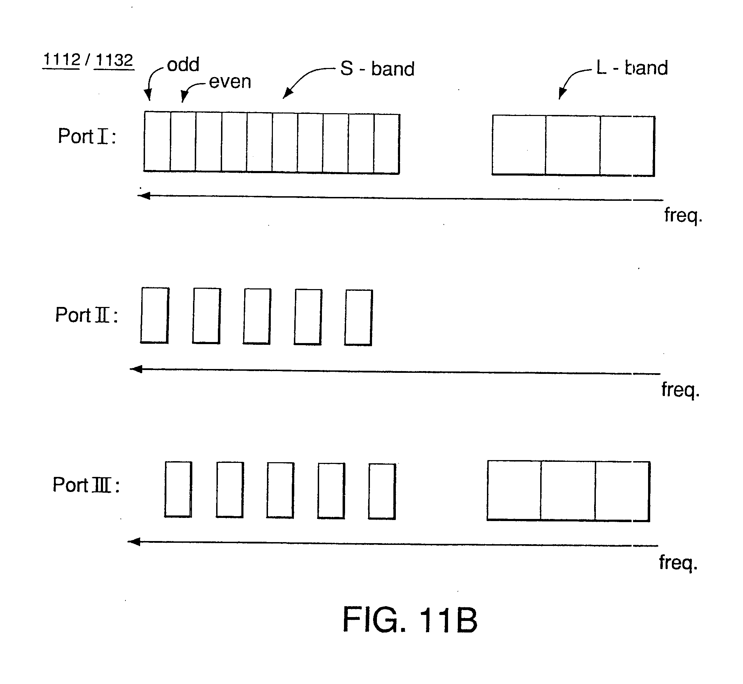

Fig. 11B illustrates properties of a DMUX **1112** that can be used as DMUX **312** according to one embodiment of the invention. DMUX **1112** has three ports (labeled I, II, and III), which are analogous to the similarly labeled ports of DMUX **312**. Fig. 11B, which is analogous to Fig. 11A in the graphical depiction of DWDM channels, graphically illustrates a channel-routing scheme implemented in DMUX **1112**. More specifically, optical signals corresponding to odd DWDM channels of the S-band are routed from port I to port II, optical signals corresponding to even DWDM channels of the S-band are routed from port I to port III, and optical signals corresponding to all DWDM channels of the L-band are routed from port I to port III.

In addition to illustrating properties of DMUX **1112,** Fig. 11B also illustrates properties of a MUX **1132** that can be used as MUX **332** according to one embodiment of the present invention. MUX **1132** has three ports (labeled I, II, and III), which are analogous to the similarly labeled ports of MUX **332.** The channel-routing scheme implemented in MUX **1132** is as follows. Optical signals corresponding to odd DWDM channels of the S-band are routed from port II to port I, optical signals corresponding to even DWDM channels of the S-band are routed from port III to port I, and optical signals corresponding to all DWDM channels of the L-band are routed from port III to port I.

An OADM analogous to OADM **300** (Fig. 3) and having DMUX **1112** and MUX **1132** of Fig. 11B in place of DMUX **312** and MUX **332,** respectively, is adapted to process optical signals corresponding to the banded channel configuration of Fig. 11A as follows. The first group of channels, which is routed through the OADM branch coupled between port II of DMUX **1112** and port II of MUX **1132,** includes odd DWDM channels of the S-band of Fig. 11A. The second group of channels, which is routed through the OADM branch coupled between port III of DMUX **1112** and port III of MUX **1132,** includes even DWDM channels of the S-band and all DWDM channels of the L-band of Fig. 11A. Similarly, an OADM analogous to OADM **500** (Fig. 5) and having DMUX **1112** and MUX **1132** of Fig. 11B in place of DMUX **312** and MUX **332,** respectively, is adapted to process optical signals corresponding to the banded channel configuration of Fig. 11A as follows. The first group of channels, which is routed between main input port **502**, drop port **506a**, add port **508a,** and main output port **504** includes odd DWDM channels of the S-band of Fig. 11A. Similarly, the second group of channels, which is routed between main input port **502**, drop port **506b**, add port **508b**, and main output port **504** includes even DWDM channels of the S-band and all DWDM channels of the L-band of Fig. 11A.

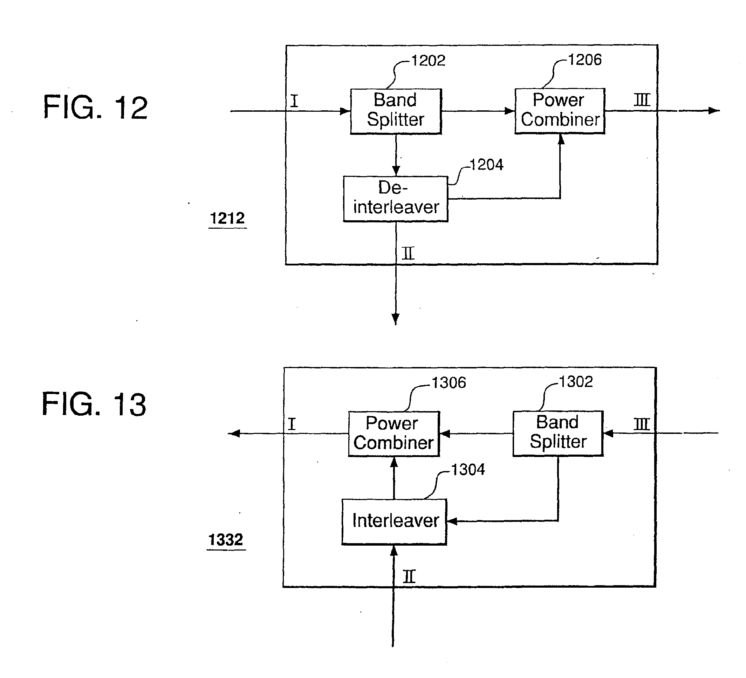

Fig. 12 shows a block diagram of a DMUX **1212** that can be used to implement DMUX **1112** illustrated in Fig. 11B according to one embodiment of the invention. DMUX **1212** routes optical signals as follows. An optical signal applied to port I is directed to a band splitter **1202** having a characteristic wavelength (or characteristic frequency *f*_{*C*}). Band splitter **1202** serves to separate light having wavelengths shorter and longer than the characteristic wavelength into two different beams and direct one beam toward a de-interleaver **1204** and the other beam toward a power combiner **1206.** Band splitter **1202** can, for example, be implemented using a glass plate oriented at 45 degrees with respect to the light propagation direction and having a dielectric coating, which transmits light with wavelengths longer than the characteristic wavelength and reflects light with wavelengths shorter than the characteristic wavelength. The characteristic wavelength is preferably such that the corresponding characteristic frequency is located between the S- and L-bands (see Figs. 11A and 11B). As a result, optical signals corresponding to the S-band are reflected toward de-interleaver **1204** while optical signals corresponding to the L-band are transmitted toward power combiner **1206**. In one embodiment, band splitter 1202 is a tunable element, which allows one to change the characteristic wavelength/frequency. The tuning can, for example, be accomplished by changing the orientation angle of the glass plate or changing its temperature. This feature enables flexible and/or adjustable bandwidth allocation for the S- and L-bands, which enables selection of a desired relative quantity of 10- and 40-Gb/s channels in the system.

De-interleaver **1204** is adapted to sort optical signals based on wavelength or DWDM channel number. For example, optical signals corresponding to odd DWDM channels of the S-band are directed toward port II while optical signals corresponding to even DWDM channels of the S-band are directed toward power combiner **1206**. De-interleavers similar to de-interleaver **1204** are well known in the art and are disclosed, for example, in U.S. Patent No. 6,560,380, the teachings of which are incorporated herein by reference. Power combiner **1206** is analogous to, e.g., power combiner **334** of Fig. 3. As such, it combines the signals received from band splitter **1202** and de-interleaver **1204** and directs the combined signal to port III.

Fig. 13 shows a block diagram of a MUX **1332** that can be used to implement MUX **1132** illustrated in Fig. 11B according to one embodiment of the invention. MUX **1332** routes optical signals as follows. An optical signal applied to port III is directed to a band splitter **1302,** which serves to separate light corresponding to the S- and L-bands into two different beams. More specifically, optical signals corresponding to the S-band are directed toward an interleaver **1304** while optical signals corresponding to the L-band are directed toward a band combiner **1306**. In one embodiment, band splitter **1302** is similar to band splitter **1202** of Fig. 12. Interleaver **1304** is adapted to essentially perform a reverse function of that performed by de-interleaver **1204.** More specifically, interleaver **1304** multiplexes the optical signals received from port II and band splitter **1302** and directs the multiplexed signal to a power combiner **1306**. In one embodiment, power combiner 1306 is analogous to, e.g., power combiner **334** of Fig. 3. As such, it combines the signals received from band splitter **1302** and interleaver **1304** and directs the combined signal to port I.

In one embodiment, each of DMUX **1212** and MUX **1332** can be implemented using different instances of the same bi-directional optical assembly. For example, an optical assembly having a first bi-directional optical element analogous to band splitter **1202**, a second bi-directional optical element analogous to band splitter **1202,** and a bi-directional optical interleaver in place of, e.g., band splitter **1202,** power combiner **1206,** and de-interleaver **1204** (Fig. 2), respectively, can serve, depending on the light propagation direction, as either DMLTX **1212** or MUX **1332.**

Referring back to Figs. 3-4 and 11A-11B, wavelength blocker **416** (Fig. 4) can be designed to implement wavelength blocker **316a** (Fig. 3) for the banded channel configuration in a relatively straightforward fashion. Namely, when wavelength blocker **416** implements wavelength blocker **316a,** the array of rotatable MEMS mirrors in switch **430** has mirrors corresponding to odd DWDM channels of the S-band of Fig. 11A. This wavelength blocker has gaps between adjacent mirrors, each of which gaps is centered at about the wavelength of the corresponding even channel of the S-band. Wavelength blocker **416** can be designed to implement wavelength blocker **316b**, for example, as follows. The array of rotatable MEMS mirrors in switch **430** has two groups of mirrors. More specifically, the first group has mirrors corresponding to even DWDM channels of the S-band, and the second group has mirrors corresponding to DWDM channels of the L-band. As such, mirrors in the first group are narrower than mirrors in the second group. In addition, mirrors in the first group have gaps between adjacent mirrors, each of which gaps is centered at about the wavelength of the corresponding odd channel of the S-band.

Now referring back to Figs. 3, 5 and 11A-11B, wavelength blocker **416** (Fig. 4) can be designed to implement wavelength blocker **516** (Fig. 5) for the banded channel configuration as follows. The array of rotatable MEMS mirrors in switch **430** has two groups of mirrors. More specifically, the first group has mirrors corresponding to (both odd and even) DWDM channels of the S-band, and the second group has mirrors corresponding to DWDM channels of the L-band. As such, mirrors in the first group are narrower than mirrors in the second group. In addition, mirrors in the first and second groups have relatively narrow gaps between adjacent mirrors to accommodate all channels of the S- and L-bands, respectively.

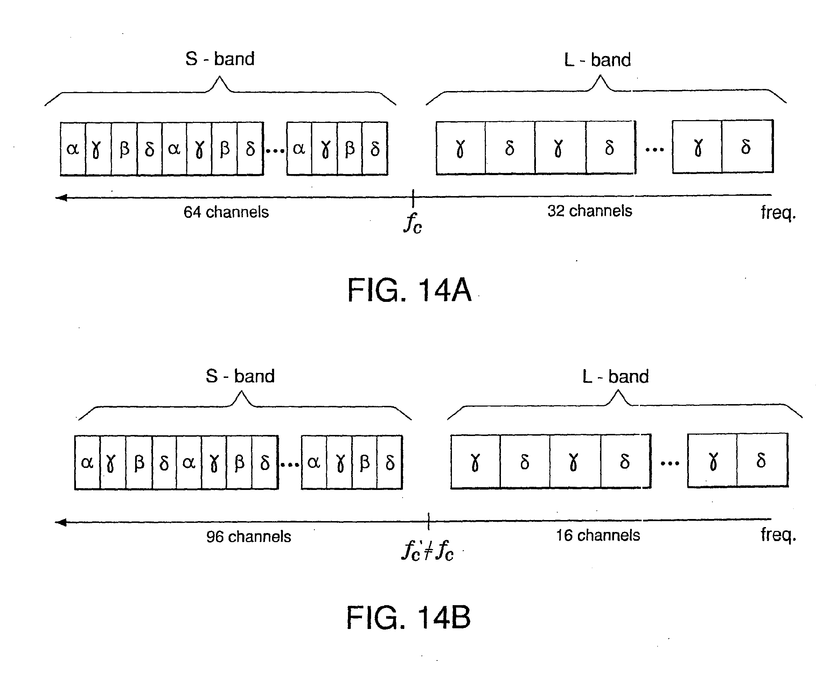

Figs. 14A-B graphically illustrate two DWDM channel-population schemes in communication system **100** (Fig. 1), which employs the banded channel configuration. More specifically, Fig. 14A shows a situation in which (i) the total bandwidth allocated to the S-band is substantially equal to the total bandwidth allocated to the L-band and (ii) the S- and L-bands accommodate 64 and 32 DWDM channels, respectively. Similarly, Fig. 14B shows a situation in which (i) the total bandwidth allocated to the S-band is substantially three times larger than the total bandwidth allocated to the L-band and (ii) the S- and L-bands accommodate 96 and 16 DWDM channels, respectively.

Referring to Fig. 14A, in one embodiment, communication system **100** (Fig. 1) employing, in each node **102**, an OADM analogous to OADM **300** (Fig. 3), which OADM has DMUX **1212** (Fig. 12) and MUX **1332** (Fig. 13), can increase its capacity by (1) increasing the number of transmitted 10-Gb/s signals and (2) at some point, adding the transmission of 40-Gb/s signals and then increasing their number as well. Suppose that, when such system **100** is deployed, it utilizes 16 DWDM channels in the S-band for the transmission of 10-Gb/s signals while the remaining channels in the S-band and all channels in the L-band are vacant. In Fig. 14A, these initially utilized (populated) channels are labeled with the letter "α". One skilled in the art will appreciate that a preferred spacing between the base frequencies of adjacent α-channels is about 200 GHz. In this initial configuration, each OADM uses only one branch (e.g., including ports analogous to drop port **306a** and add port **308a**) while the other branch (e.g., including ports analogous to drop port **306b** and add port **308b**) remains substantially unutilized (also see Figs. 11A-11B).

In an upgrade, an operator of system **100**, e.g., a telephone company, may increase the system capacity by populating 16 additional DWDM channels in the S-band for the transmission of additional 10-Gb/s signals. In Fig. 14A, these additionally populated channels are labeled with the letter "β". One skilled in the art will appreciate that a preferred spacing between the base frequencies of adjacent β- and α-channels is about 100 GHz. With the α- and β-channels populated, each OADM reaches the full capacity of its one branch because all odd channels of the S-band are now populated. The other branch in each OADM still remains unutilized after this upgrade.

Several options are available for a next upgrade of system **100**, during which resources corresponding to the unutilized branch in each OADM will be used. For example, the operator of system **100** may further increase the system capacity by populating 16 additional DWDM channels in the S-band and 16 DWDM channels in the L-band. In Fig. 14A, the channels populated during this upgrade are labeled with the letter "γ". While γ-channels in the S-band are employed for the transmission of 10-Gb/s signals, γ-channels in the L-band can be employed for the transmission of 40-Gb/s signals. One skilled in the art will understand that this upgrade can achieve a desired purpose of adding a 40-Gb/s service without disrupting the 10-Gb/s service already in place. In addition, the current traffic volume of the 10-Gb/s service is increased.

During yet another upgrade, the operator of system **100** may increase the system capacity even further by populating the 16 remaining DWDM channels in the S-band and the 16 remaining DWDM channels in the L-band. In Fig. 14A, the channels populated during this upgrade are labeled with the letter "δ". With the δ-channels populated, each OADM reaches its full capacity of 64 10-Gb/s channels and 32 40-Gb/s channels, for a total of 96 channels.

An upgrade scheme similar to that just described in the context of Fig. 14A may also be implemented for the S- and L-bands of Fig. 14B. Accordingly, the α-, β-, γ-, and δ-channels shown in Fig. 14B correspond to the upgrade stages analogous to those which populated the similarly labeled channels in Fig. 14A. However, an important difference between the schemes of Figs. 14A and 14B is in the number of populated channels of each type after each upgrade and, therefore, in the realized system capacity. This difference can readily be discerned in the table, which follows.

**Table 2:**

| **Number of Populated Channels in the Course of System Upgrades** | | | | | | |
|---|---|---|---|---|---|---|
| *Upgrade Stage* | *Fig. 14A* | | | *Fig. 14B* | | |
| | *S-band* | *L-band* | *Total* | *S-band* | *L-band* | *Total* |
| α | 16 | - | 16 | 24 | - | 24 |
| α+β | 32 | - | 32 | 48 | - | 48 |
| α+β+γ | 48 | 16 | 64 | 72 | 8 | 80 |
| *α*+*β*+*γ*+*δ* | 64 | 32 | 96 | 96 | 16 | 112 |

One skilled in the art will appreciate that, by appropriately selecting the characteristic frequency (*f*_{*C*}) between the S- and L-bands (see Figs. 14A-B), the operator of system **100** can step through different desired values of the system capacity in the course of upgrades.

While this invention has been described with reference to illustrative embodiments, this description is not intended to be construed in a limiting sense. For example, a hybrid DWDM channel configuration may be realized by having channels similar to those of the alternated channel configuration of Fig. 7 in the S-band of the banded channel configuration of Fig. 11A. In such a hybrid channel configuration, there are three sets of channels having three different bandwidth values, e.g., about 33, 67, and 100 GHz, respectively. The channels of the first and second sets are interleaved with each other and occupy the S-band, and the channels of the third set occupy the L-band. Each of the OADM topologies shown in Figs. 3 and 5 can be used to implement an OADM for said hybrid DWDM channel configuration. Different designs of wavelength blockers can be used without departing from the scope and principles of the invention. For example, in wavelength blocker **416** (Fig. 4), switch **430** and signal dump **440** can be replaced with an array of fixed mirrors and a segmented LC (liquid-crystal) mask positioned between grating **420** and that array of fixed mirrors. Each segment of the LC mask can then be turned on or off to block or pass, respectively, light traveling between the grating and the fixed mirror corresponding to the segment. Different DWDM channel-population schemes can be implemented without departing from the principles of the invention. Although multiplexers and de-multiplexers of the invention have been described in the context of their use in OADMs, one skilled in the art will understand that these multiplexers and de-multiplexers can also be used in other optical routing devices. OADMs of the invention can be designed to process more than two sets of channels. Consequently, each of such OADMs has a corresponding number of branches, each adapted to process DWDM channels of the corresponding set of channels. Various modifications of the described embodiments, as well as other embodiments of the invention, which are apparent to persons skilled in the art to which the invention pertains are deemed to lie within the principle and scope of the invention as expressed in the following claims.

Although the steps in the following method claims, if any, are recited in a particular sequence with corresponding labeling, unless the claim recitations otherwise imply a particular sequence for implementing some or all of those steps, those steps are not necessarily intended to be limited to being implemented in that particular sequence.

## Claims

1. An optical apparatus, comprising a plurality of ports, which apparatus is adapted to route optical signals between different ports based on wavelength, wherein:
the optical signals correspond to two or more sets of channels, each set having one or more channels with a corresponding bandwidth value; and
at least two different sets of channels have different bandwidth values.

2. The invention of claim 1, wherein the optical apparatus comprises a routing device having first, second, and third ports, said routing device adapted to:
route optical signals corresponding to a first group of channels between the first port and the second port; and
route optical signals corresponding to a second group of channels between the first port and the third port.

3. The invention of claim 2, wherein:
the two or more sets of channels include first and second sets of channels;
each channel in the first set has a first bandwidth value;
each channel in the second set has a second bandwidth value;
the first group of channels has channels from the first set of channels; and
the second group of channels has channels from the second set of channels.

4. The invention of claim 3, wherein:
the second bandwidth value is about two times larger than the first bandwidth value;
a sum of the first and second bandwidth values is about 100 GHz;
each channel in the first set is adapted to transmit signals having a bit rate of about 10 Gb/s;
each channel in the second set is adapted to transmit signals having a bit rate of about 40 Gb/s;
the channels of the first group are interleaved with the channels of the second group; and
base frequencies of two adjacent channels are separated by about 50 GHz.

5. The invention of claim 2, wherein the routing device comprises:
a bi-directional interleaver coupled to the first port;
a first dispersion compensator coupled between the interleaver and the second port; and
a second dispersion compensator coupled between the interleaver and the third port, wherein:
the interleaver is adapted to route (i) the optical signals corresponding to the first group of channels between the first port and the first dispersion compensator and (ii) the optical signals corresponding to the second group of channels between the first port and the second dispersion compensator; and
the first and second dispersion compensators are adapted to reduce an amplitude of group delay ripples corresponding to the interleaver.

6. The invention of claim 2, wherein the optical apparatus comprises an optical add/drop multiplexer (OADM) and the routing device is a part of said OADM, wherein:
the OADM comprises first and second optical branches, both coupled between a DMUX and a MUX;
the DMUX is coupled to a main input port and adapted to route (i) optical signals corresponding to the first group of channels via the first optical branch and (ii) optical signals corresponding to the second group of channels via the second optical branch;
the MUX is coupled to a main output port and adapted to route optical signals received via the first and second optical branches to said main output port; and
each optical branch includes:
a wavelength blocker adapted to block one or more selected channels belonging to a corresponding group of channels;
a splitter coupled between the DMUX and the wavelength blocker, wherein the splitter is adapted to (i) split a signal received from the DMUX into first and second split signals and (ii) direct the first slit signal to the wavelength blocker and the second split signal to a drop port; and
a combiner coupled between the wavelength blocker and the MUX, wherein the combiner is adapted to (i) combine signals received from the wavelength blocker and an add port and (ii) direct the combined signal to the MUX.

7. The invention of claim 6, wherein the wavelength blocker comprises:
a grating adapted to disperse light received via the optical branch and corresponding to different channels into different beams; and
an on/off switch adapted to block beams corresponding to the one or more selected channels, wherein the grating is further adapted to recombine beams not blocked by the switch into a single beam and direct the recombined beam into the optical branch, wherein the on/off switch comprises an array of rotatable mirrors adapted to direct (i) beams corresponding to the one or more selected channels toward a signal dump and (ii) other beams back toward the grating.

8. The invention of claim 2, wherein:
the optical apparatus comprises an optical add/drop multiplexer (OADM) and the routing device is a part of said OADM; and
the OADM comprises:
a wavelength blocker coupled between a main input port and a main output port and adapted to block one or more selected channels;
a signal splitter coupled between the main input port and the wavelength blocker and adapted to direct signals received from the main input port to the wavelength blocker and a DMUX;
the DMUX coupled the signal splitter and adapted to direct (i) optical signals corresponding to the first group of channels to a first drop port and (ii) optical signals corresponding to the second group of channels to a second drop port;
a signal combiner coupled between the wavelength blocker and the main output port and adapted to combine signals received from the wavelength blocker and a MUX and direct the combine signal to the main output port; and
the MUX adapted to direct optical signals applied to first and second add ports to the signal combiner.

9. A method of transmitting optical signals, comprising:
de-multiplexing optical signals applied to a main input port of an optical add/drop multiplexer (OADM) for selective distribution between a main output port and a drop port of the OADM; and
multiplexing optical signals applied to an add port of the OADM with the optical signals distributed from the main input port to the main output port, wherein:
the optical signals correspond to two or more sets of channels, each set having one or more channels with a corresponding bandwidth value; and
at least two different sets of channels have different bandwidth values.

10. The invention of claim 9, wherein:
the OADM comprises first and second add ports and first and second drop ports; and
the method comprises:
directing optical signals corresponding to a first group of channels via one or more of the following paths: (i) from the main input port to the first drop port, (ii) from the main input port to the main output port, and (iii) from the first add port to the main output port; and
directing optical signals corresponding to a second group of channels via one or more of the following paths: (i) from the main input port to the second drop port, (ii) from the main input port to the main output port, and (iii) from the second add port to the main output port.
